# EUROPÄISCHE PATENTSCHRIFT

(11) **EP 2 231 315 B1**
(45) Veröffentlichungstag und Bekanntmachung des Hinweises auf die Patenterteilung: **28.03.2012**
(21) Anmeldenummer: 08866376.0
(22) Anmeldetag: 16.12.2008
(51) Int. Cl.: B01F 13/00, B01F 7/00, A47J 43/10, B01F 15/02, B05B 11/00, B05B 15/00, B01F 15/00

(54) **VORRICHTUNG ZUM DURCHMISCHEN EINER MASSE**
DEVICE FOR MIXING A MASS
DISPOSITIF POUR MÉLANGER UNE MASSE

(30) Priorität: 03.01.2008 DE 102008003941; 23.06.2008 DE 102008030623
(43) Veröffentlichungstag der Anmeldung: 29.09.2010
(73) Patentinhaber: Umsonst-Kübler, Petra, 76534 Baden-Baden (DE)
(72) Erfinder: Umsonst-Kübler, Petra, 76534 Baden-Baden (DE)
(74) Vertreter: Patentanwälte Westphal, Mussgnug & Partner
(86) Internationale Anmeldenummer: PCT/EP2008/010724
(87) Internationale Veröffentlichungsnummer: WO 2009/083141

(56) Entgegenhaltungen:
- EP-A- 0 888 811
- CA-A1- 2 310 180
- DE-U1- 20 307 684
- US-A- 1 931 087
- US-A- 3 907 459
- US-A- 6 095 676
- US-B1- 6 729 500

## Beschreibung

Die Erfindung betrifft eine Vorrichtung zum Durchmischen einer in einem Behälter befindlichen Masse, insbesondere einer Flüssigkeit, durch Verschwenken des Behälters um eine horizontale Achse.

Flüssigkeiten, die aus zwei oder mehreren unterschiedlichen Flüssigkeiten mit oder ohne festen Stoffen zusammengesetzt sind, werden beispielsweise in Form von Salatsoßen bereitgehalten. Die unterschiedlichen Flüssigkeiten, wie beispielsweise Öl und Essig, haben die Tendenz, sich zu entmischen. Ebenso haben insbesondere festere Teile derartiger Mischungen aus Flüssigkeiten die Tendenz, sich unten im Bereich des Behälterbodens abzusetzen. Ähnliche Probleme bestehen bei Farben, beispielsweise Farben mit Glitzereffekten, Ölmischungen aus Kombinationen mit hoher und niedrigerer Dichte, sowie im pharmakologischen oder kosmetischen Bereich. Wenn diese Flüssigkeiten verwendet werden sollen, so müssen sie in der Regel vor dem Entnehmen oder Ausgießen durchmischt werden. Wenn derartige Mischungen von Flüssigkeiten aus unterschiedlichen Komponenten durch Ausgießen benutzt werden sollen, beispielsweise durch Ausgießen von Salatsoße aus einem flaschenähnlichen Behälter, so besteht die Gefahr, dass der Benutzer das Durchmischen vergisst. In diesem Fall gießt er nur die Flüssigkeitskomponente aus, die sich oben abgesetzt hat. Um ein Durchmissen zu erhalten, ist es üblich, den Behälter mit der Flüssigkeit zu schütteln.

Weiter sind beispielsweise aus CA 2 310 180 A1 oder US 6,095,676 A Vorrichtungen gemäss dem Oberbegriff des Anspruchs 1 zum Aufschäumen von Milch bekannt, welche eine relativ zu einem Behälter in Axialrichtung bewegbare Gewindespindel mit einem daran beweglich gelagerten Rührkörper umfassend, wobei durch Hin- und Herbewegung der Gewindespindel in Axialrichtung der Rührkörper in Rotation versetzt wird.

Aus der EP 0 888 811 A ist eine Vorrichtung mit einer motorisch angetriebenen Gewindespindel bekannt, durch welche ein Rührkörper in eine Rotation versetzt wird.

Der Erfindung liegt die Aufgabe zugrunde, eine Vorrichtung der eingangs genannten Art zu schaffen, die ein Durchmischen ermöglicht, ohne dass der Behälter geschüttelt werden muss.

Diese Aufgabe wird dadurch gelöst, dass eine in dem Behälter ortsfest anbringbare Gewindespindel vorgesehen ist, auf der ein mittels Verschwenken um eine horizontale Achse entlang der Gewindespindel bewegbarer, mit einem Innengewinde versehener Körper angeordnet ist, der mit im Wesentlichen in radialer Richtung abragenden Misch- und/oder Rührelementen versehen ist. Der Körper, der bevorzugt eine relativ große Masse aufweist, bewegt sich entlang der Gewindespindel, wenn der Behälter mit der Gewindespindel um mehr als 90° um eine horizontale Achse verschwenkt wird. Aufgrund der Gewindespindel und des Innengewindes wird der Körper in Drehbewegung versetzt, so dass er mit seinen Misch- und/oder Rührelementen die Flüssigkeit durchmischt, wenn er sich entlang der Gewindespindel bewegt.

In Ausgestaltung der Erfindung wird vorgesehen, dass die Gewindespindel ein ein- oder mehrgängiges Gewinde mit in axialer Richtung variierender Steigung enthält. Dadurch kann die Geschwindigkeit beeinflusst werden, mit welcher sich der Körper in axialer Richtung bewegt und mit welcher er rotiert.

In Ausgestaltung der Erfindung wird vorgesehen, dass die Gewindespindel in Verlängerung einer Ausgießöffnung eines Behälters angeordnet ist. Vorzugsweise enthält die Ausgießöffnung einen labyrinthartigen Kanal. Bei dieser Ausführungsform ist mit einem Ausgießen, bei dem der Behälter aus einer vertikalen Position um mehr als 90° um eine horizontale Achse verschwenkt wird, ein Misch- oder Rühreffekt kombiniert, ohne dass der Benutzer darauf achten muss. Da durch den labyrinthartigen Kanal die Ausgießgeschwindigkeit beschränkt ist, wird sicher gestellt, dass bereits ein Durchmischen erfolgt, bevor die gewünschte Menge an Flüssigkeit ausgegossen ist.

Bei einer anderen Ausgestaltung wird vorgesehen, dass die Gewindespindel rohrförmig ausgebildet ist und mit einem Ende an ein Pump- oder Dosierventil angeschlossen ist. Bei dieser Ausführungsform reicht es üblicherweise aus, den Behälter ein- oder auch zweimal um eine horizontale Achse zu Verschwenken, um eine gute Durchmischung zu erreichen. Anschließend kann dann das Pump- oder Dosierventil betätigt werden, wobei die Flüssigkeit über die rohrförmige Gewindespindel angesaugt und dann ausgegeben wird.

In weiterer Ausgestaltung der Erfindung wird vorgesehen, dass die Gewindespindel und der mit Misch- und/oder Rührelementen versehene Körper mit dem Pump- oder Dosierventil oder mit den Elementen einer Ausgießöffnung als eine in einer Öffnung des Behälters einsetzbare Baugruppe ausgebildet ist.

Um die Ausgießgeschwindigkeit zu beschränken, kann in der Ausgießöffnung eines Behälters auch ein Sieb angeordnet sein. Ebenso ist es möglich, einen labyrinthartigen Kanal mit der Anordnung eines Siebes zu kombinieren. Vorteilhaft ist es auch, wenn dem Ausgang der Ausgießöffnung eine Mischkammer vorgeschaltet ist. Damit wird eine noch bessere Durchmischung insbesondere zu Beginn des Ausgießens erreicht.

Zweckmäßigerweise wird der Ausgießöffnung ein entfernbares Verschlusselement zugeordnet. Dadurch ist es möglich, den Behälter um eine horizontale Achse um mehr als 90° zu verdrehen und insbesondere auf den Kopf zu stellen, ohne dass die darin enthaltene Flüssigkeit ausläuft. Auf diese Weise lässt sich durch mehrmaliges Verschwenken eine besonders intensive Durchmischung erzielen.

Bei einer weiteren Ausgestaltung der Erfindung ist an dem Behälter ein sich im Wesentlichen über seine Höhe erstreckendes Fenster vorgesehen. Dieses Fenster bildet eine Füllstandsanzeige. Vorteilhaft wird dem Fenster eine Skalierung zugeordnet (auf oder in dem Fenster oder auf der Wand seitlich von dem Fenster), so dass auch eine Zählfunktion der Dosierungen möglich ist.

Wenn der Behälter mit einem Pump- oder Dosierventil versehen ist, das an die rohrförmige Gewindespindel angeschlossen ist, so tritt keine Flüssigkeit ohne Betätigung des Pump- oder Dosierventils aus. Der Behälter kann somit ein- oder mehrfach um 180° gedreht werden, ohne dass Flüssigkeit austritt. Bei dieser Ausführungsform wird weiter vorgesehen, dass das Pump- oder Dosierventil mit einer Kappe abgedeckt ist, die an dem Behälter anbringbar ist und die als Standfuß für den Behälter gestaltet ist. Um aus diesem Behälter dann mittels des Pump- oder Dosierventils Flüssigkeit auszubringen, muss der Behälter um etwa 180° gedreht werden, so dass dabei schon eine Durchmischung der Flüssigkeit erfolgt, ohne dass der Benutzer besonders darauf achten muss.

Weitere Merkmale und Vorteile der Erfindung ergeben sich aus der nachfolgenden Beschreibung der in den Zeichnungen dargestellten Ausführungsformen und den Unteransprüchen.
- Fig. 1: zeigt einen Axialschnitt durch einen Behälter mit einer Ausgießöffnung und einer erfindungsgemäßen Vorrichtung zum Durchmischen,
- Fig. 2: einen Axialschnitt durch einen als Einwegartikel ausgebildeten Behälter mit einer erfindungsgemäßen Vorrichtung zum Durchmischen und einem Pump- oder Dosierventil und
- Fig. 3: einen Axialschnitt durch einen mehrfach befüllbaren Behälter mit einer erfindungsgemäßen Vorrichtung zum Durchmischen und einem Pump- oder Dosierventil.

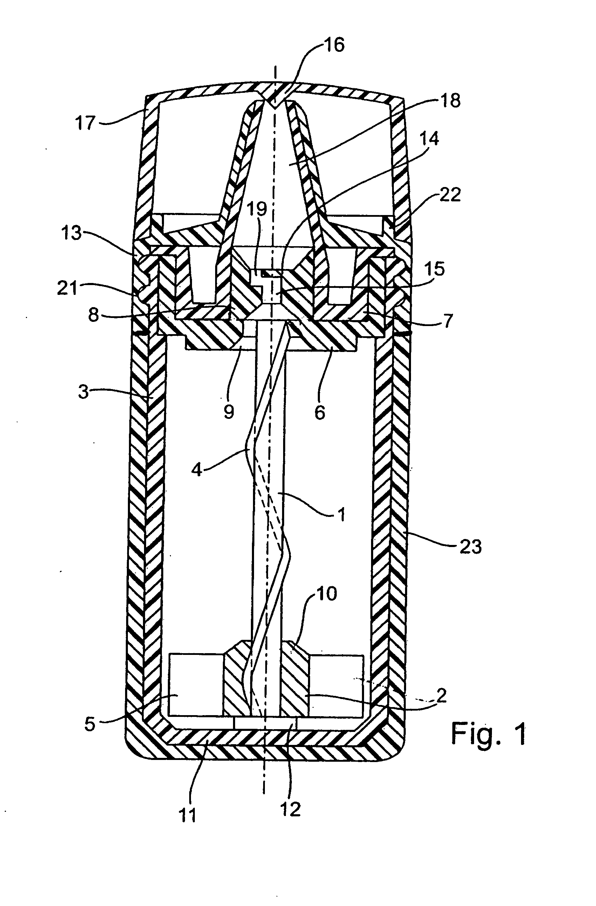

Bei dem in Fig. 1 dargestellten Ausführungsbeispiel ist ein oben offener, im Wesentlichen zylindrischer Behälter 3 vorgesehen. In das offene Ende des Behälters 3 ist ein Abschlussboden 6 eingesetzt, der in etwa topfartig ausgebildet ist. Der Abschlussboden 6 ist mit einer zentralen Öffnung versehen. In den etwa topfförmigen Abschlussboden 6 ist ein Auslasselement 7 eingesetzt, das mit einem konisch nach oben zu einer Auslassöffnung sich verjüngenden Auslass versehen ist. Der Abschlussboden 6, das Auslasselement 7 und der Behälter 3 werden mittels eines Abschlusselementes 13 zusammengehalten, das mit einem mit Innengewinde versehenen Kragen das obere Ende des Behälters 3 übergreift und auf ein Außengewinde 21 im oberen Bereich des Behälters 3 aufgeschraubt ist. Das Abschlusselement 13 ist mit einem konischen Ansatz versehen, der den konischen Auslassbereich des Auslasselementes 7 außen übergreift. Das Auslasselement 7 bildet in dem konischen Bereich eine Mischkammer 18.

Für die Auslassmündung des Auslasselementes 7 ist ein Verschlusselement in Form eines Dichtkonus 16 vorgesehen, der zu einer Kappe 17 gehört, die außen auf einen Kragen 22 des Abschlusselementes 13 aufgesteckt ist. Der Kragen 22 bildet innen einen Tropfrand, in welchem gegebenenfalls abtropfende Flüssigkeit gesammelt werden kann.

An dem Abschlussboden 6 ist eine Gewindespindel 1 angebracht, die mit einem steil verlaufenden Gewindegang 4 versehen ist. Auf dieser Gewindespindel 1 ist ein Körper 2 geführt, der mit einem entsprechenden Innengewinde versehen ist. Der Körper 2, der beispielsweise aus Edelstahl hergestellt ist, weist eine relativ hohe Masse auf. Er ist mit im Wesentlichen radial von ihm abragenden Misch- und/oder Rührelementen 5 versehen, die Schaufeln oder Bürsten oder Zähne oder Nadeln sein können. Die dem Abschlussboden 6 zugewandte Seite des Körpers 2 ist mit einem Dichtungselement, vorzugsweise einem Dichtungskonus 10, versehen, der einer Dichtungsfläche, vorzugsweise einem Dichtungskonus 9 des Abschlussbodens 6 zugeordnet ist.

Die Gewindespindel 1 ist in eine Fassung des Abschlussbodens 6 eingesteckt. Das gegenüberliegende Ende der Gewindespindel 1 ist mit einem Anschlag 12 versehen, der dem Boden 11 des Behälters 3 gegenüberliegt.

An die zentrale Öffnung des Abschlussbodens 6 schließt ein Einsatz 8 an, der zur Verzögerung der Ausgießgeschwindigkeit dient. Der Einsatz 8 nimmt beispielsweise einen oder mehrere Siebeinsätze 15 auf und/oder enthält einen labyrinthartigen Kanal 19, um die Ausgießgeschwindigkeit oder Ausflussgeschwindigkeit einer Flüssigkeit festzulegen.

Bei dem Ausführungsbeispiel ist der Behälter 3 mit einem Außengehäuse 23 umgeben, das dekorativen Zwecken dient und beispielsweise aus Glas, Kunststoff oder Edelstahl o.dgl. bestehen kann.

In den Behälter 3 wird eine Flüssigkeit eingefüllt, die vorzugsweise aus einem Gemisch von zwei oder mehr Flüssigkeiten besteht, die gegebenenfalls noch Feststoffe oder Schwebestoffe o.dgl. enthalten. Der aufrecht stehende Behälter wird dann mittels dem Abschlussboden 6 verschlossen, an dem die Gewindespindel 1 und der Körper 2 mit den Rühr- oder Mischelementen 5 angebracht ist. Anschließend werden der Einsatz 8, das Auslasselement 7, und das Abschlusselement 13 angebracht, so dass der Behälter 3 verschlossen ist.

Wenn die Kappe 17 abgenommen und der Behälter 3 um eine horizontale Achse um mehr als 90° aus der dargestellten vertikalen Position verschwenkt wird, so läuft die in dem Behälter 3 vorhandene Flüssigkeit über die Öffnung des Abschlussbodens 6, das Sieb und die Auslaufkanäle in die Mischkammer 18 und anschließend aus der Ausgießmündung aus. Aufgrund des Verschwenkens verlässt der Körper 2 seine Position und bewegt sich aufgrund der Schwerkraft entlang der Gewindespindel 1 zu dem Abschlussboden 6. Dabei wird er in eine rotierende Bewegung versetzt, so dass ein Rühren und/oder Mischen der Flüssigkeit erfolgt. Sobald der Körper 2 sich mit seinem Dichtungselement 10 an die Dichtungsfläche 9 des Abschlussbodens 6 anlegt, ist der Ausgießvorgang beendet. Dadurch erfolgt eine Dosierung durch Begrenzung der durch ein einmaliges Verschwenken ausbringbaren Flüssigkeit. Die Gewindespindel 1 hat eine Gewindewendel 4 mit einer relativ steilen Steigung, so dass der Körper 2 nur eine oder wenige Umdrehungen auf seinem Weg vom Anschlag 12 im Bereich des Bodens 11 des Behälters 3 bis zu dem Abschlussboden 6 durchführt. Bei der dargestellten Ausführungsform ist vorgesehen, dass die Gewindewendel 4 eine gleichförmige Steigung besitzt. Bei einer abgewandelten Ausführungsform wird vorgesehen, dass die Steigung der Gewindewendel 4 in Längsrichtung der Gewindespindel 1 variiert. Der dann bei einem Verschwenken des Behälters 3 auf der Gewindespindel 1 sich bewegende Körper 2 rotiert dann mit unterschiedlichen Geschwindigkeiten entsprechend der Steigung der Gewindewendel.

Bei der dargestellten Ausführungsform dient der Behälter 3 zur Aufnahme von Flüssigkeit. Das Außengehäuse 23 hat in diesem Fall nur eine Schutz- und/oder Dekorationsfunktion. Bei einer abgewandelten Ausführungsform wird anstelle eines Behälters 3 ein korbartiges Gebilde vorgesehen, so dass dann das Außengehäuse 23 als der Behälter dient, der Flüssigkeit aufnimmt. Die Form des Außengehäuses 23 kann beliebig sein. Es muss nur eine obere Öffnung haben, in die die Ausgießeinrichtung dichtend eingesetzt werden kann. Die Ausgießeinrichtung ist dann als eine Baueinheit gestaltet, die auf verschiedenartige Behälter aufgesetzt werden kann.

Bei der dargestellten Ausführungsform ist nur eine Gewindespindel 1 mit nur einem darauf geführten Körper 2 vorgesehen. Bei abgewandelten Ausführungsformen der Erfindung werden zwei oder mehrere Gewindespindeln vorgesehen, die jeweils einen Körper aufnehmen. Bei einer anderen Ausführungsform hat die Gewindespindel in axialer Richtung mehrere durch Anschläge begrenzte Abschnitte, auf denen die jeweils eigenen Körper mit Misch- und/oder Rührelementen geführt sind. Die Abschnitte können unterschiedliche Gewindesteigungen aufweisen, so dass die Körper sich unterschiedlich schnell entlang der jeweiligen Abschnitten der Gewindespindel bewegen und dabei unterschiedlich schnell rotieren, wenn der Behälter aus der vertikalen Lage um mehr als 90° verschwenkt wird.

Ausgießeinrichtungen mit einer Gewindespindel mit mehreren Abschnitten und mehreren darauf geführten Körpern werden insbesondere dann eingesetzt, wenn großvolumige Behälter vorgesehen werden, die ein Volumen von einem Liter oder mehr aufweisen.

Der Einsatzbereich der erfindungsgemäßen Ausgießeinrichtung liegt beispielsweise im Haushalt, insbesondere als Salatsoßenmischer als Tischgerät mit einem Inhalt von 0,1 Liter bis 1,0 Liter oder auch für einen Einsatz mit einem größeren Inhalt, beispielsweise an Selbstbedienungs-Salatbuffets. Darüber hinaus kann das Ausgießsystem auch als Farbmischer o.dgl. oder als Ölmischer eingesetzt werden, sowie im Pharmabereich oder im Kosmetikbereich, um Flüssigkeiten unterschiedlicher Dichte und/oder unterschiedlicher Konsistenz auszugießen und aufzutragen.

Die einzelnen Teile der Ausgießeinrichtung können aus Kunststoff und/oder Stahl, insbesondere Edelstahl, oder Glas oder Keramik o.dgl. hergestellt sein. Sie sind leicht voneinander lösbar und wieder zusammensetzbar, um eine Reinigung zu ermöglichen.

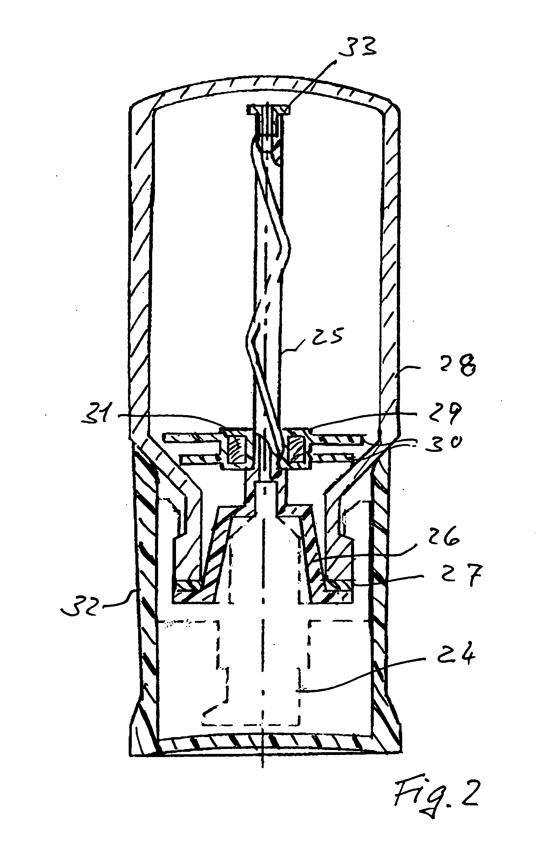

Bei der Ausführungsform nach Fig. 2 ist eine erfindungsgemäße Vorrichtung zum Durchmischen mit einem Pump- und Dosierventil 24 kombiniert. Das Pump- und Dosierventil 24 ist ein bekanntes Element, das in der Zeichnung nur gestrichelt dargestellt ist. Die Gewindespindel 25 ist bei dem Ausführungsbeispiel nach Fig. 2 mit einem topfartigen Ansatz versehen, der einen umlaufenden Ringflansch aufweist. Dieser topfartige Ansatz 26 ist unter Zwischenfügen eines Dichtungsringes 27 auf den Hals einer Einwegflasche 28 aufgesteckt. Das Pump- und Dosierventil 24 besitzt einen Kragen, der außen auf den Hals der Einwegflasche 28 aufgesteckt und aufgeklipst ist. Die Gewindespindel 25 ist hohl ausgebildet, so dass sie für das anschließende Pump- und Dosierventil 24 als Saugkanal dient. Auf der Gewindespindel 25 ist ein mit einem Innengewinde versehener Körper 29 geführt, der mit nach außen abragenden Misch- und/oder Rührelementen 30 versehen ist. Die Misch- oder Rührelemente 30 sind elastisch verformbar, so dass der Körper 29 durch den einen geringeren Durchmesser aufweisenden Hals der Einwegflasche 28 in deren Inneres eingebracht werden kann. Der Körper 29 ist aus Kunststoff hergestellt. In ihn sind zur Erhöhung der Masse schwerere Elemente eingebettet, beispielsweise Metallelemente 31 oder ein Metallring.

Das Pump- oder Dosierventil 24 ist mit einer Kappe 32 abgedeckt. Die Kappe 32 ist mit einem Ende als Standfuß ausgebildet, so dass die Einwegflasche 28 so abgestellt und aufbewahrt werden kann, dass sich das Pump- oder Dosierventil 24 unten befindet. Wird die Einwegfalsche 28 in die Hand genommen, die Kappe 32 abgenommen, so wird sie um 180° gedreht, um in die Benutzungslage zu kommen. Diese Bewegung führt dazu, dass der Körper 29 mit den Misch- oder Rührelementen 30 sich in axialer Richtung auf der Gewindespindel 25 bewegt und dabei rotiert, so dass der Inhalt der Einwegflasche 28 durchmischt wird. Hierzu muss die die Einwegflasche benutzende Person keine besonderen Überlegungen anstellen. Bei Betätigen des Pump- oder Dosierventils 24 wird die Flüssigkeit über die hohle Gewindespindel 25 angesaugt. Die hohle Gewindespindel ist an ihrem freien Ende mit einem Einsatz 33 versehen, der die Bewegung des Körpers 29 begrenzt.

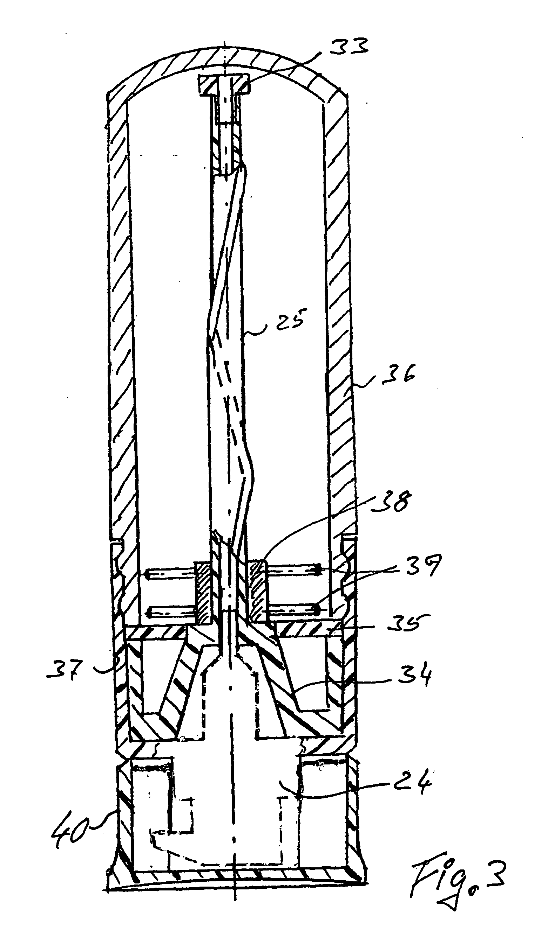

Auch bei der Ausführungsform nach Fig. 3 ist die hohle Gewindespindel 25 mit einem Pump- und Dosierventil 24 kombiniert. Die Gewindespindel 25 ist auch bei dieser Ausführungsform einteilig mit einem Ansatz 34 ausgebildet, der unter Zwischenfügen eines Dichtungsringes 35 auf das offene Ende einer Flasche 36 oder dergleichen aufgesetzt ist. Die Flasche 36 ist mit einem Außengewinde versehen, auf das ein Kragen 37 aufgeschraubt ist, der zu dem Pump- oder Dosierventil 24 gehört. Nach Lösen des Pump- oder Dosierventils 24 ist der Innenraum der Flasche 36 zugänglich, um gereinigt und/oder nachgefüllt zu werden.

Auch bei der Ausführungsform nach Fig. 3 ist auf der hohlen Gewindespindel ein mit Innengewinde versehener Körper 38 geführt. Bei dem Ausführungsbeispiel besteht der Körper 38 aus Metall. Er ist mit stiftartigen Misch- und Rührelementen 39 versehen.

Auf den Hals des Pump- oder Dosierventils 24 ist eine mit nach innen ragenden Rippen versehene Kappe 40 aufgesteckt, die auch bei diesem Ausführungsbeispiel als Standfuß dienen kann.

Wenn die Flasche 36 mit der erfindungsgemäßen Vorrichtung zum Durchmischen benutzt werden soll, so wird sie in die Hand genommen, und um 180° gedreht, so dass dann bei abgenommener Kappe 40 das Pump- oder Dosierventil 24 betätigt werden kann. Durch die Drehung um 180° wird erreicht, dass der Körper 38 mit seinen Misch- und Rührelementen 39 sich auf der Gewindespindel in axialer Richtung bewegt und dabei rotiert.

Die anhand von Fig. 1 erläuterten Abwandlungen bezüglich der Gestaltung der Gewindespindel und/oder des darauf angeordneten, sich durch Verschwenken in axialer Richtung bewegenden und dabei rotierenden Körpers können sich in gleicher Weise auch bei den Ausführungsformen nach Fig. 2 und 3 vorgenommen werden.

Bei einer abgewandelten Ausführungsform ähnlich Fig. 1 ist dem Auslasselement (7) ein Ventil zugeordnet, das die Ausgießöffnung verschließt. Dieses Ventil, das natürlich nicht sehr dicht sein muss, wird von dem Körper (2) geöffnet, wenn der Behälter soweit verdreht worden ist, dass der Körper (2) auf der Gewindespindel (1) zu dem Abschlussboden (6) bewegt wird. Der Körper (2) öffnet aufgrund seines Gewichtes das federbelastete Ventil. Das Ventil ist bei einer Ausführungsform eine geschlitze Membran, von der mittels an dem Körper angebrachten Stiften odgl. Laschen abgeschwenkt werden, um das Ventil zu öffnen.

Bei einer Ausführungsform der Erfindung besteht der Körper aus Kunststoff, der mit Gewichtseinlagen vorzugsweise aus Metall eine größere Masse erhalten hat. Die Misch- und/oder Rührelemente haben bei einer Ausführungsform die Gestalt von einer oder mehrern vorzugsweise mit radialen Schlitzen unterteilten Lochplatten. Werden mehrere Lochplatten vorgesehen, so werden diese im axialen Abstand angeordnet. Die Misch- und/oder Rührelemente (5), die in beliebigen Varianten miteinander kombiniert werden können, sind vorzugsweise derart elastisch verformbar, dass sie beim Einführen in einen Behälter (3) in radialer Richtung nachgeben, sich jedoch anschließend wieder in radialer Richtung strecken. Die erfindungsgemäße Vorrichtung zum Durchmischen eignet sich auch für zylindrische oder ovale Quetschflaschen. Bei ovalen Quetschflaschen werden vorzugsweise zwei oder mehrere zueinander parallele Gewindespindeln (1) mit jeweils Körpern (2) vorgesehen, die Misch- und/oder Rührelemente (5) aufweisen.

## Patentansprüche

1. Vorrichtung zum Durchmischen einer in einem Behälter (3, 28, 36) befindlichen Masse, insbesondere einer Flüssigkeit, durch Verschwenken des Behälters (3, 28, 36) um eine horizontale Achse, wobei eine in dem Behälter (3, 28, 36) anbringbare Gewindespindel (1, 25) vorgesehen ist, auf der ein entlang der Gewindespindel bewegbarer, mit Innengewinde versehener Körper (2, 29, 38) angeordnet ist, wobei der Körper (2, 29, 39) so an der Gewindespindel (1, 25) angebracht ist, dass bei einem Verschwenken des Behälters (3, 28, 36) um die horizontale Achse der Körper (2, 29, 38) seine Position verlässt und sich aufgrund der Schwerkraft entlang der Gewindespindel (1, 25) bewegt und der Körper (2, 29, 8) mit im Wesentlichen in radialer Richtung abragenden Misch- und/oder Rührelementen (5, 30, 39) versehen ist, **dadurch gekennzeichnet, dass** die Gewindespindel ertsfest anbringbar vorgeschen ist.

2. Vorrichtung nach Anspruch 1, **dadurch gekennzeichnet, dass** die Misch- und/oder Rührelemente (5, 30, 39) wenigstens eine Lochplatte enthalten.

3. Vorrichtung nach Anspruch 1 oder 2, **dadurch gekennzeichnet, dass** die Gewindespindel (1, 25) ein Gewinde mit in axialer Richtung variierender Steigung aufweist.

4. Vorrichtung nach einem der Ansprüche 1 bis 3, **dadurch gekennzeichnet, dass** die Gewindespindel (1, 25) und der mit Misch- und/oder Rührelementen (5, 30, 39) versehene Körper (2, 29, 38) eine vorgefertigte Baueinheit bilden.

5. Vorrichtung nach einem der Ansprüche 1 bis 4, **dadurch gekennzeichnet, dass** die Gewindespindel (1) in Verlängerung einer Ausgießöffnung eines Behälters (3) angeordnet ist.

6. Vorrichtung nach Anspruch 5, **dadurch gekennzeichnet, dass** der Ausgießöffnung eine Ventileinrichtung zugeordnet ist, die mittels des auf der Gewindespindel (1) bewegbaren Körpers (2) geöffnet wird.

7. Vorrichtung nach Anspruch 6, **dadurch gekennzeichnet, dass** die Ausgießöffnung einen labyrinthartig verlaufenden Kanal (19) enthält.

8. Vorrichtung nach Anspruch 5, **dadurch gekennzeichnet, dass** der Körper (2) mit einem Dichtungsansatz (10) versehen ist, der dem Eingang (9) der Ausgießöffnung zugeordnet ist.

9. Vorrichtung nach einem der Ansprüche 1 bis 4, **dadurch gekennzeichnet, dass** die Gewindespindel (25) rohrförmig ausgebildet ist und mit einem Ende an ein Pump- oder Dosierventil (24) angeschlossen ist.

10. Vorrichtung nach Anspruch 9, **dadurch gekennzeichnet, dass** die Gewindespindel (1, 25) und der mit Misch- und/oder Rührelementen (5, 30, 39) versehene Körper (2, 29, 38) mit dem Pump- oder Dosierventil (24) oder mit den Elementen der Ausgießöffnung als eine in einer Öffnung eines Behälters (3, 28, 36) einsetzbare Baugruppe ausgebildet sind.

11. Vorrichtung nach einem der Ansprüche 9 bis 10, **dadurch gekennzeichnet, dass** das Pump- oder Dosierventil (24) mit einer Kappe (32, 40) abgedeckt, die als Standfuß für den Behälter gestaltet ist.

## Claims

1. A device for mixing a compound present in a container (3, 28, 36), in particular a liquid, by pivoting said container (3, 28, 36) about a horizontal axis, whereby one in said container (3, 28, 36) attachable threaded spindle (1, 25) is provided, whereby on said threaded spindle an internally threaded body (2, 29, 38) which is movable along said spindle is arranged, whereby said body (2, 29, 38) is arranged on said threaded spindle (1, 25) so that during pivoting of said container (3, 28, 36) around said horizontal axis said body (2, 29, 38) is leaving its position and is moving due to the force of gravity along said threaded spindle (1, 25) and said body (2, 29, 38) is provided with substantially in radial direction projecting mixing and/or stirring elements (5, 30, 39),
**characterized in that**
said threaded spindle is provided to be stationary attachable.

2. The device as claimed in Claim 1,
**characterized in that** the mixing and/or stirring elements (5, 30, 39) contain at least one perforated plate.

3. The device as claimed in Claim 1 or 2,
**characterized in that** the thread of the threaded spindle (1, 25) has pitch varying in axial direction.

4. The device as claimed in any one of Claims 1 to 3,
**characterized in that** the threaded spindle (1, 25) and the body (2, 29, 38) provided with mixing and/or stirring elements (5, 30, 39) form a prefabricated unit.

5. The device as claimed in any one of Claims 1 to 4,
**characterized in that** the threaded spindle (1) is arranged in extension of a pouring opening of a container (3).

6. The device as claimed in Claim 5,
**characterized in that** the pouring opening is assigned with a valve unit, which is opened by means of the body (2) movable on the threaded spindle (1).

7. The device as claimed in Claim 6,
**characterized in that** the pouring opening contains a labyrinth-like running channel (19).

8. The device as claimed in Claim 5,
**characterized in that** the body (2) is provided with a sealing attachment (10) which is assigned to the inlet (9) of the pouring opening.

9. The device as claimed in any one of Claims 1 to 4, **characterized in that** the threaded spindle (25) is tubular and connected at one end to a pumping or metering valve (24).

10. The device as claimed in Claim 9,
**characterized in that** the threaded spindle (1, 25) and the body (2, 29, 38) provided with mixing and/or stirring elements (5, 30, 39) are formed with the pumping or metering valve (24) or with the elements of the pouring opening as one in an opening of a container (3, 28, 36) insertable unit.

11. The device as claimed in Claim 9 or 10,
**characterized in that** the pumping or metering valve (24) is covered by a cap (32, 40), which is designed as a pedestal for the container.

## Revendications

1. Dispositif de mélange d'une masse, en particulier d'un liquide renfermé dans un récipient (3, 28, 36) en faisant pivoter ce récipient (3, 28, 36) autour d'un axe horizontal, comportant une broche filetée (1, 25) pouvant être montée dans le récipient (3, 28, 36) et sur laquelle est installé un corps mobile (2, 29, 38) comportant un taraudage interne mobile le long de celle-ci, ce corps (2, 29, 38) étant monté sur la broche filetée (1, 25) de sorte qu'il change de position en présence d'un pivotement du récipient (3, 28, 36) autour de son axe horizontal, et se déplace le long de la broche filetée (1, 25) sous l'action de sa gravité, et le corps (2, 29, 38) étant équipé d'éléments mélangeurs et/ou agitateurs (5, 30, 39) s'étendant essentiellement en direction radiale,
**caractérisé en ce que**
la broche filetée peut être montée dans une position fixe.

2. Dispositif conforme à la revendication 1,
**caractérisé en ce que**
les éléments mélangeurs et/ou agitateurs (5, 30, 39) comportent au moins une plaque perforée.

3. Dispositif conforme à la revendication 1 ou 2,
**caractérisé en ce que**
la broche filetée (1, 25) comporte un filetage ayant un pas variable en direction axiale.

4. Dispositif conforme à l'une des revendications 1 à 3,
**caractérisé en ce que**
la broche filetée (1, 25) et le corps (2, 29, 38) équipé des éléments mélangeurs et/ou agitateurs (5, 30, 39) forment une unité préfabriquée.

5. Dispositif conforme à l'une des revendications 1 à 4,
**caractérisé en ce que**
la broche filetée (1) est située dans le prolongement d'une ouverture de versement du récipient (3).

6. Dispositif conforme à la revendication 5,
**caractérisé en ce qu'**
à l'ouverture de versement est associé un dispositif de soupape qui s'ouvre par l'intermédiaire du corps (2) mobile sur la broche filetée (1).

7. Dispositif conforme à la revendication 6,
**caractérisé en ce que**
l'ouverture de versement renferme un canal (19) s'étendant en forme de labyrinthe.

8. Dispositif conforme à la revendication 5,
**caractérisé en ce que**
le corps (2) est équipé d'une garniture d'étanchéité (10) qui est associée à l'entrée (9) de l'ouverture de versement.

9. Dispositif conforme à l'une des revendications 1 à 4,
**caractérisé en ce que**
la broche filetée (25) est une broche tubulaire reliée par l'une de ses extrémités à une soupape de pompage ou de dosage (24).

10. Dispositif conforme à la revendication 9,
**caractérisé en ce que**
la broche filetée (1, 25) et le corps (2, 29, 38) équipé des éléments mélangeurs et/ou agitateurs (5, 30, 39) sont réalisés, avec la soupape de pompage ou de dosage (24) ou avec les éléments de l'ouverture de versement sous la forme d'un module pouvant être monté dans une ouverture du récipient (3, 28, 36),

11. Dispositif conforme à l'une des revendications 9 et 10,
**caractérisé en ce que**
la soupape de pompage ou de dosage (24) est recouverte d'un capuchon (32, 40) qui est réalisé sous la forme d'un pied pour le récipient.
